# EUROPEAN PATENT APPLICATION

(11) **EP 1 031 312 A1**
(43) Date of publication of application: **30.08.2000**
(21) Application number: 99830091.7
(22) Date of filing: 22.02.1999
(51) Int. Cl.: A47L 9/24, A47L 9/02

(54) **Articulation for pipes in cleaning appliances**

(71) Applicant: POLTI S.p.A., 22070 Bulgarograsso (Como) (IT)
(72) Inventor: Polti, Franco, 22070 Olgiate Comasco (Como) (IT)
(74) Representative: Siniscalco, Fabio

(57) **Abstract**

An articulation (10) for pipes in cleaning appliances which is designed to connect two portions of pipe together and comprises two tubular elements (11, 13), each of which can be connected to a respective pipe portion, fitted with two corresponding hollow heads (12, 14) coupled together in such a way that they rotate with respect to each other, the articulation additionally comprising a sleeve (15) mounted over the said hollow heads (12, 14) and able to move between a position in which the heads (12, 14) are locked and the tubular elements (11, 13) are aligned, and an unlocked position in which the heads (12, 14) are free to rotate with respect to each other, the two tubular elements (11, 13) being in mutual internal communication via the hollow heads (12, 14). An articulation of this type enables the user to clean hard to access areas while remaining in a comfortable position, and is simple and effective in operation.

## Description

The subject of the present invention is an articulation for pipes in cleaning appliances.

As is well known, a vacuum cleaner comprises an electric motor which operates a rotor connected - via one or more pipes in series - to a suction head which may be a brush, a crevice tool, a nozzle or other element; the dirt picked up by the suction head is held inside a collection chamber by means of a suitable filter. The electric motor, the rotor, the collection chamber and the filter are housed in a body fitted with castors.

When there are several pipes in series, the first pipe is a flexible hose while the subsequent pipe or pipes are rigid. In such cases, a flexible hose is for example provided, followed by a rigid pipe and optionally a further rigid extension pipe which is coupled to the preceding pipe by means of a force fit; alternatively, a flexible hose is provided, followed by a telescopically extendible rigid pipe.

This combination of pipes enables the user to clean while normally remaining in an upright position, the rigid pipe or pipes acting as a long handle via which the suction head is manoeuvred. This head can also rotate about an axis in order to reach less accessible areas.

However, when cleaning hard to access areas, the user can no longer remain in an upright position but has to bend down and/or kneel down, assuming a position which is at best uncomfortable and at worst quite exhausting.

The object of the present invention is to provide an articulation for pipes in cleaning appliances which will enable the abovementioned disadvantage to be overcome and which is both simple and effective in operation.

This object is achieved by means of an articulation for pipes in cleaning appliances which is designed to connect two portions of pipe together and comprises two tubular elements, each of which can be connected to a respective pipe portion, fitted with two corresponding hollow heads coupled together in such a way that they rotate with respect to each other, the articulation additionally comprising a sleeve mounted over the said hollow heads and able to move between a position in which the heads are locked and the tubular elements are aligned, and an unlocked position in which the heads are free to rotate with respect to each other, the two tubular elements being in mutual internal communication via the said hollow heads.

A better understanding of the invention will be gained by reading the following description of a nonlimiting embodiment example thereof, illustrated in the appended drawings, in which:
Fig. 1 is an exploded perspective view of an articulation according to the invention for pipes in cleaning appliances;
Fig. 2 is a partially cut-away perspective view of the articulation in Fig. 1 mounted in the bent position;
Fig. 3 is a sectional view on the plane III-III of a detail of the said articulation;
Figs 4, 5 and 6 show, in longitudinal section, how the said articulation works;
Figs 7 and 8 show, in perspective view, two applications of the said articulation.

The articulation illustrated is denoted as a whole by the reference numeral 10.

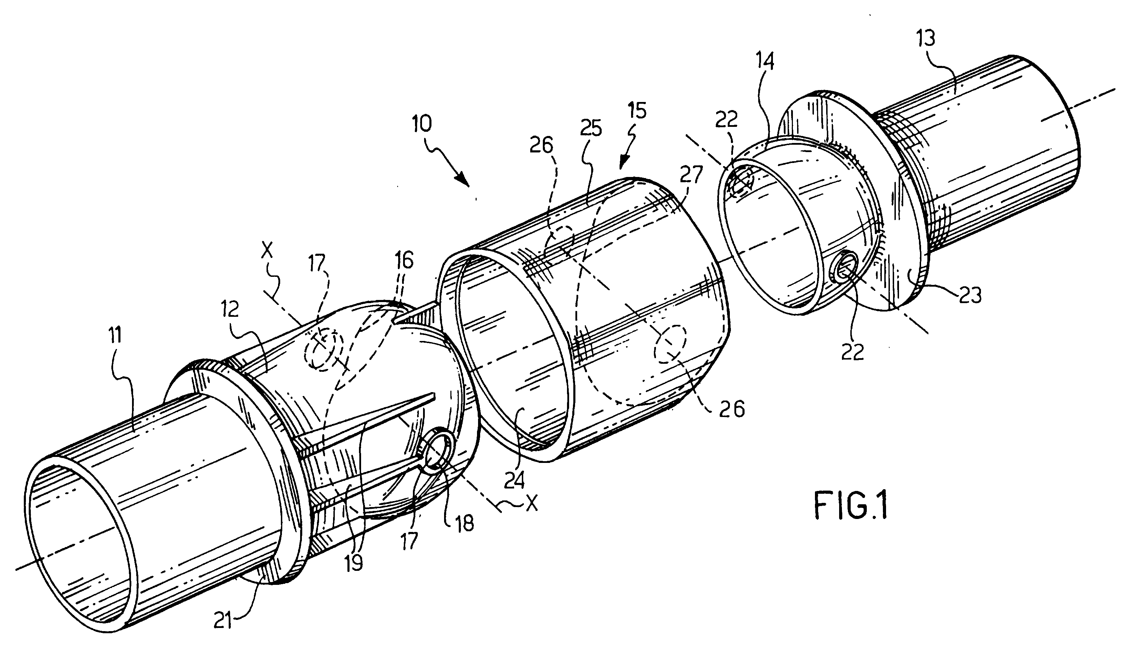

With reference to Fig. 1, the articulation 10 consists of a first tubular element 11 having a hollow head 12, a second tubular element 13, also having a hollow head 14, and a sleeve 15. Both the tubular elements 11, 13 and the sleeve 15 are made from a material having a certain degree of elasticity.

The head 12 of the tubular element 11 is cylindrical and has an oblique mouth 16 with a curved profile. This head 12 has two opposing through holes 17, each with an annular external projecting rim 18; it also has longitudinal reinforcing ribs 19 on the outside and a stop fin 20 on the abovementioned terminal portion. A collar 21 is provided at the base of the head 12.

The head 14 of the tubular element 13 is essentially hemispherical and has two opposing annular projections 22. The base of the head 14 is also provided with a collar 23.

The sleeve 15 has a cylindrical internal surface 24 and a prismatic external surface 25 with rounded edges. There are two opposing dome-shaped projections 26 on the internal surface 24. The sleeve 15 also has an oblique mouth 27.

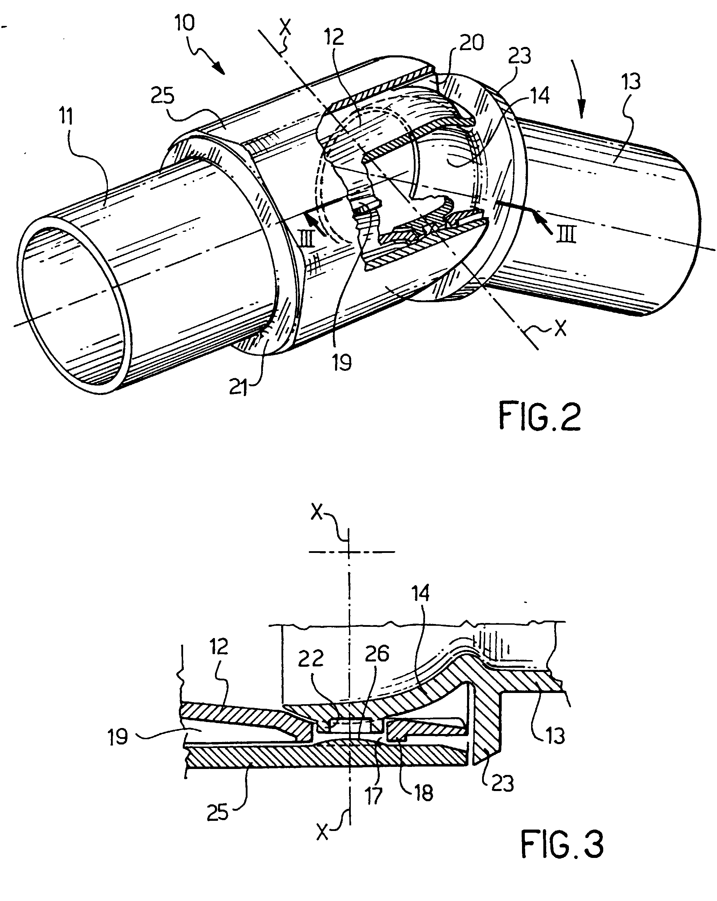

With reference to Figs 2 and 3, the head 14 of the tubular element 13 is housed in the head 12 of the tubular element 11 with the two annular projections 22 of the head 14 being inserted in the two through holes 17 of the head 12. The sleeve 15 is fitted over the head 12, its two internal projections 26 being inserted in the two annular projecting rims 18 of the holes 17 in the head 12, facing the annular projections 22. The sleeve 15 is thus locked axially in place by the two collars 21 and 23. The coupling between the internal projections 26 and the rims 18 of the holes 17 prevents the sleeve from rotating with respect to the head 12, but this connection can be released by exerting a given force in the rotational direction.

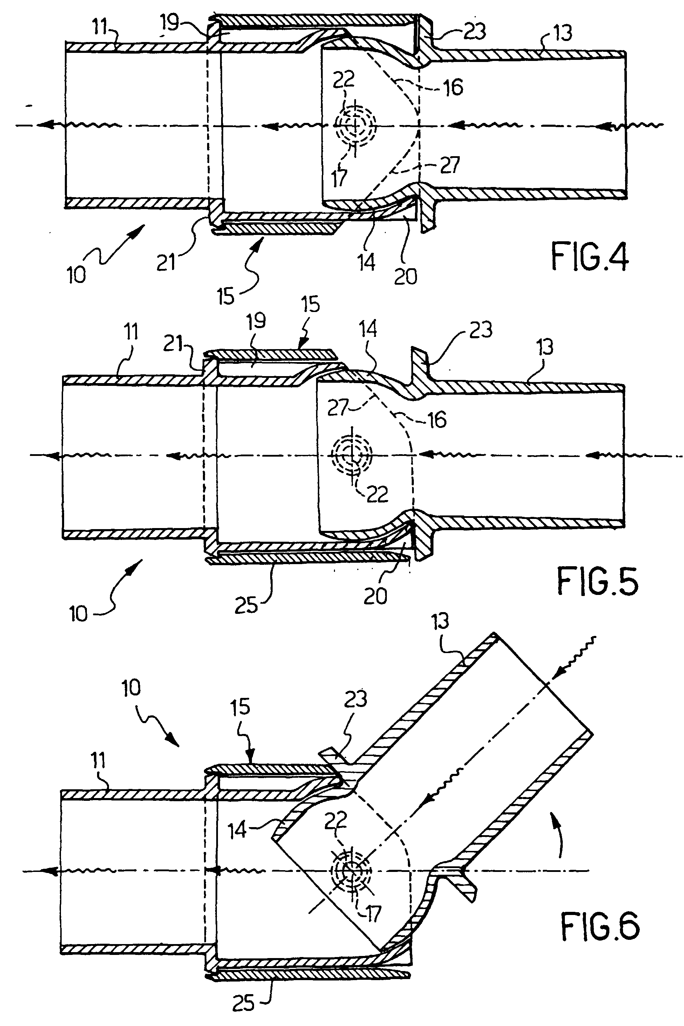

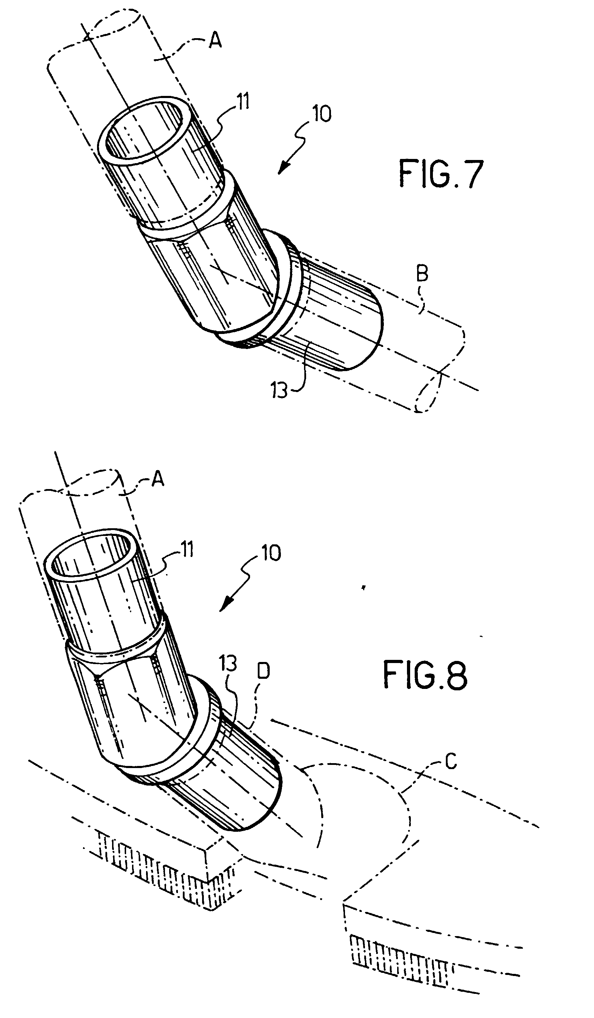

The abovementioned coupling defines two angular positions of the sleeve, 180° apart, illustrated in Figs 4 and 5, which are reached by rotating the sleeve with respect to the head 12. Consequently, when the sleeve 15 is in one of the two abovementioned angular positions with a given coupling between projections 26 and rims 18 of the holes 17, it is sufficient to rotate the sleeve through 180° for it to arrive at the other angular position, in which the abovementioned coupling is inverted, bearing in mind that the uncoupling and coupling actions involve applying a certain degree of force in the rotational direction.

In the position shown in Fig. 4, the oblique mouth 16 of the head 12 of the tubular element 11 slopes in the opposite direction to that of the oblique mouth 27 of the sleeve 15. In this position the two tubular elements 11 and 13 are in alignment and are locked in place as the collar 23 of the element 13 abuts against the protruding part of the mouth 16 of the head 12 of the element 11 on the one hand and against the protruding part of the mouth 27 of the sleeve 15 on the other hand.

The collar 23 also abuts against the fin 20 on the head 12 of the tubular element 11, thus helping to keep this locked position stable; together with the ribs 19, this fin also helps to reinforce the head 12 and to support the sleeve 15.

In the position shown in Fig. 5, the oblique mouth 16 of the head 12 of the tubular element 11 slopes in the same direction as the oblique mouth 27 of the sleeve 15. In this case, as shown in sequence in Figs 5 and 6, the tubular element 13 is free to rotate with respect to the tubular element 11 in one direction, through a given angle of rotation about the axis X of the hinge defined by the coupling between the two annular projections 22 of the head 14 of the element 13 and the two holes 17 in the head 12 of the element 11. It is precisely this overlapping and coincidence of the oblique mouths 16 and 27 of the head 12 of the tubular element 11 and of the sleeve 15 respectively that determine this limited freedom of rotation. One of the two extreme angular positions of rotation, i.e. that in Fig. 5, is defined by one part of the collar 23 of the tubular element 13 abutting against the protruding part of the abovementioned oblique mouths 16 and 27 and against the fin 20, while the other extreme angular position of rotation, i.e. that in Fig. 6, is defined by the opposite part of the abovementioned collar 23 abutting against the set-back part of the oblique mouths 16 and 27.

Figs 7 and 8 show two applications of the articulation 10 in a cleaning appliance, in particular a vacuum cleaner.

In Fig. 7 the articulation connects two pipes A and B of the vacuum cleaner which place the suction unit of the appliance in communication with a suction head. The tubular elements 11 and 13 are coupled to the pipes A and B respectively by means of a force fit; for this purpose the connection end of the pipe A is conical and the connection part of the tubular element 11 is cylindrical, with a diameter ranging between the minimum diameter and the maximum diameter of the conical end of the pipe A. Conversely, the connection ends of the tubular element 13 and the pipe B are conical and cylindrical respectively, with the same diameter ratios between conical and cylindrical end as those stated above.

In Fig. 8 the articulation 10 connects the pipe A directly to the suction head C which, in the illustration, is a brush. In this case the head C has a cylindrical tubular connection D which couples up with the tubular element 13 of the articulation 10 in the same way as the pipe B in the preceding example.

When cleaning accessible areas the articulation 10 is held in the position shown in Fig. 4, with the tubular elements 11 and 13 in alignment, so that the pipes A and B - or the pipe A and the connection D - are aligned and form an ordinary straight handle.

When cleaning less accessible areas, for example underneath furniture, the articulation 10 assumes the bent position shown in Fig. 6, once the sleeve 15 has been rotated so as to increase the angle at which the pipe A extends upwards so that the user does not need to bend down and can maintain a comfortable position.

The dust sucked up by the head is conveyed into the pipe B in the application shown in Fig. 7 and into the tubular connection D in the application shown in Fig. 8, and from there passes into the articulation 10 via the tubular elements and their hollow heads, in the direction indicated by the arrows in Figs 4 to 6.

It should be emphasized that this articulation 10 is structurally and functionally very simple and is therefore also reliable.

The prismatic shape of the external surface 25 of the sleeve 15 enables it to be gripped easily.

Needless to say, variations and/or additions may be made to the components described and illustrated.

The configuration of the components of the articulation may vary.

The various couplings between the components may be replaced with functionally equivalent couplings.

Instead of being able to rotate, the sleeve may have a simple cylindrical shape without an oblique mouth and may be able to move axially between a position in which the heads are locked in place and one in which they are unlocked. The two positions can also in that case be defined by suitable snap-couplings, for example with one of the two tubular elements.

The rotating sleeve is particularly effective when the articulation is connected to the pipes by means of a force-fit coupling because that way the articulation cannot slip off the pipes; with an axially movable sleeve, on the other hand, the articulation could slip off since the direction of such a movement would also be axial.

The tubular elements of the articulation could be threaded, as could the pipes, thereby forming a screw coupling, in which case it would, of course, be more expedient to use an axially movable sleeve in order to prevent the articulation from becoming disconnected from the pipes.

It would also be possible to provide a snap-coupling between the tubular elements and the pipes, so as to prevent the articulation from slipping off irrespective of whether a rotationally movable or axially movable sleeve is used.

The articulation described can be used in any cleaning appliance, for example a steam cleaning appliance.

## Claims

1. Articulation (10) for pipes (A, B; A, D) in cleaning appliances which is designed to connect two portions of pipe together and comprises two tubular elements (11, 13), each of which can be connected to a respective pipe portion, fitted with two corresponding hollow heads (12, 14) coupled together in such a way that they rotate with respect to each other, the articulation additionally comprising a sleeve (15) mounted over the said hollow heads (12, 14) and able to move between a position in which the heads (12, 14) are locked and the tubular elements (11, 13) are aligned, and an unlocked position in which the heads (12, 14) are free to rotate with respect to each other, the two tubular elements (11, 13) being in mutual internal communication via the said hollow heads (12, 14).

2. Articulation according to Claim 1, in which the two hollow heads (12, 14) are hinged with respect to each other.

3. Articulation according to Claim 2, in which one (14) of the two heads is essentially hemispherical and is housed in a corresponding seat in the other head (12) through an oblique mouth (16) in the latter.

4. Articulation according to Claim 3, in which the hinging action between the two heads (12, 14) is achieved by means of opposing projections (22) on one of the two heads (14) which are inserted in corresponding opposing holes (17) in the other head (12).

5. Articulation according to any one of the preceding claims, in which the sleeve (15) can rotate between the locked position and the unlocked position.

6. Articulation according to Claim 3 or 4, in which the sleeve (15) has an oblique mouth (27) which coincides with the oblique mouth (16) of the other head (14) and can rotate between the locked position and the unlocked position, the said oblique mouths (16, 27) sloping in opposite directions in the locked position and the said oblique mouths (16, 27) sloping in the same direction in the unlocked position.

7. Articulation according to Claim 6, in which the locked and unlocked positions of the sleeve (15) are defined by snap-couplings (18, 26) between the sleeve (15) and the other head (14).

8. Articulation according to Claim 7, in which the said snap-couplings are formed by opposing projections (26) on the internal surface (24) of the sleeve (15) which are inserted in corresponding opposing seats (18) in the other head (12).

9. Articulation according to any one of Claims 6, 7, 8, in which the sleeve (15) is locked axially in place by two collars (21, 23) provided at the base of the two heads (12, 14) respectively.

10. Articulation according to any one of Claims 5 to 9, in which the external surface (25) of the sleeve (15) is prismatic.

11. Articulation according to Claim 1, in which the sleeve can move axially between the locked position and the unlocked position.

12. Articulation according to any one of Claims 1, 5, 11, in which the locked and unlocked positions are defined by snap-couplings between the sleeve and one of the two tubular elements.

13. Articulation according to any one of the preceding claims, in which the tubular elements (11, 13) are designed to be coupled to the pipe portions by means of a force fit.
